# EUROPÄISCHE PATENTSCHRIFT

(11) **EP 1 190 891 B1**
(45) Veröffentlichungstag und Bekanntmachung des Hinweises auf die Patenterteilung: **19.03.2008**
(21) Anmeldenummer: 01109316.8
(22) Anmeldetag: 11.04.2001
(51) Int. Cl.: B60N 2/16

(54) **Höhenverstellbares Untergestell eines Kraftfahrzeugsitzes mit zwei Seitenteilen**
Height adjustable frame for automotive vehicle seats with two side parts
Support d'un siège de véhicule automobile réglable en hauteur à deux parties latérales

(30) Priorität: 30.08.2000 DE 10042851
(43) Veröffentlichungstag der Anmeldung: 27.03.2002
(73) Patentinhaber: C.Rob. Hammerstein GmbH & Co.KG, 42699 Solingen (DE)
(72) Erfinder: Becker, Burckhard, 42657 Solingen (DE); Houston, Robert, 42799 Leichlingen (DE); Moog, Michael, 42719 Solingen (DE)
(74) Vertreter: Bauer, Wulf

(56) Entgegenhaltungen:
- DE-A- 10 029 669
- DE-C- 19 754 962
- DE-C- 19 827 067
- DE-C- 19 944 961
- US-A- 3 765 720
- US-A- 5 622 406

## Beschreibung

Die Erfindung bezieht sich auf ein höhenverstellbares Untergestell eines Kraftfahrzeugsitzes mit einem linken und einem rechten Schienenpaar einer Längsverstellvorrichtung und mit einem linken und mit einem rechten Seitenteil, die jeweils über einen hinteren und einen vorderen Schwenkarm mit der zugehörigen Sitzschiene des Schienenpaars gelenkverbunden sind.

Höhenverstellbare Untergestelle dieser Art sind in vielerlei Ausführungen bekannt. Jede Sitzseite stellt ein Gelenkviereck dar. Dieses wird dadurch eingestellt und festgestellt, dass ein Gelenk einstellbar und feststellbar gemacht wird, beispielsweise mittels eines zum Gelenk konzentrischen Zahnbogens und eines mit diesem Zahnbogen in Eingriff befindlichen Ritzels. Die Einstellung und Feststellung kann über einen Antrieb, zumeist Elektromotor, oder manuell erfolgen. Aus der DE 198 27 067 C1 ist ein höhenverstellbares Untergestell eines Kraftfahrzeugsitzes entsprechend dem Oberbegriff des Anspruchs 1 bekannt. Dabei ist man bestrebt, die Einstell- und Feststellvorrichtung am Seitenteil anzuordnen. Dadurch bleibt sie bei manueller Betätigung immer in gleicher Position zu einem Passagier.

Weiterhin ist man bestrebt, die Einstell- und Feststellvorrichtung nicht zu weit nach hinten zu positionieren, insbesondere nicht im Bereich unterhalb einer Rückenlehne des Kraftfahrzeugsitzes, sondern mehr nach vorn, zur Sitzvorderkante hin anzuordnen. Sie ist dadurch griffgünstiger für einen Passagier zu erreichen.

Von diesen Überlegungen geht die Erfindung aus. Sie hat es sich zur Aufgabe gemacht, das Untergestell eines Kraftfahrzeugsitzes der eingangs genannten Art dahingehend weiterzuentwickeln, dass die Arretiervorrichtung, die für das Einstellen und Feststellen sorgt, recht weit nach vorn, jedenfalls vorzugsweise vor der Längsmitte der Seitenteile angeordnet werden kann. Dadurch eröffnet sich die Möglichkeit, im hinteren Bereich des Sitzes, unterhalb der Rückenlehne, Platz zu sparen. Die Bedienelemente für die Arretiervorrichtung lassen sich griffgünstig anordnen.

Ausgehend von dem höhenverstellbaren Untergestell der eingangs genannten Art wird diese Aufgabe dadurch gelöst, dass ein Blockierarm vorgesehen ist, der mit einem unteren Endbereich am Gelenkpunkt eines hinteren Schwenkarms an der zugehörigen Sitzschiene angelenkt ist und der in Nähe seines oberen Endes in einer Arretiervorrichtung lösbar festgelegt ist, die am zugehörigen Seitenteil befestigt ist.

Der Blockierarm verläuft nahezu auf einer Diagonalen im Gelenkviereck, das aus der Sitzschiene, dem hinteren Schwenkarm, dem Seitenträger und dem vorderen Schwenkarm gebildet wird. Dadurch wird das Gelenkviereck deutlich steifer im arretierten Zustand als bei Blockierung nur eines der vier Gelenke. Die Arretiervorrichtung lässt sich an unterschiedlichen Stellen des Seitenteils anordnen, dabei kann man eine griffgerechte Position für eine manuelle Verstellung erzielen, auch für eine motorische Einstellung kann man eine optimale Position finden. Dabei ist man vom eigentlichen Gelenkpunkt frei, spart also dort an Bauraum bzw. kann den Bauraum anderweitig nutzen.

In einer bevorzugten Ausführung weist der Blockierarm im Bereich seines oberen, vorderen Endes eine Verzahnung auf und hat die Arretiervorrichtung ein im zugehörigen Seitenteil drehbar gelagertes Ritzel. Auf diese Weise ist mit einfachen Mitteln eine sehr gut zu bedienende und sicher sperrende Arretiervorrichtung erreicht.

In einer Alternativen kann das oberen, vordere Ende des Blockierarms als Spindel ausgeführt sein und ist am Seitenteil eine drehbare Mutter festgelegt, die diese Spindel aufnimmt.

In einer besonders bevorzugten Ausführung ist die Arretiervorrichtung in Nähe des Gelenkpunktes des vorderen Schwenkarmes am zugehörigen Seitenteil angeordnet. Dadurch ergibt sich eine relativ grosse Abstützlänge durch den Blockierarm. Weiterhin eröffnet sich die Möglichkeit, vorderen und hinteren Schwenkarmen der Sitzseite in einer Ebene anzuordnen und den Blockierarm in einer ihr zu versetzten Ebene anzubringen. Der Blockierarm ist dadurch ein ebenes Teil. Er verläuft parallel zum zugehörigen Seitenteil.

In einer weiteren, bevorzugten Ausführung hat der Blockierarm eine seiner Verzahnung gegenüberliegende Führungsfläche. Es ist ein Führungsteil vorgesehen, das dem Ritzel gegenüberliegend am zugehörigen Seitenteil befestigt ist. Auf diese Weise wird der Blockierarm zwischen Ritzel und Führungsteil geführt. Dadurch ergibt sich eine funktionsgerechte und praxistaugliche Ausbildung. Diese wird noch dadurch vorteilhaft weiterentwickelt, dass das obere Ende des Blockierarmes im Bereich der Arretiervorrichtung ringförmig umgriffen ist.

Weitere Vorteile und Merkmale der Erfindung ergeben sich aus den übrigen Ansprüchen sowie der nun folgenden Beschreibung eines nicht einschränkend zu verstehenden Ausführungsbeispieles der Erfindung, das unter Bezugnahme auf die Zeichnung näher erläutert wird. In dieser zeigen:

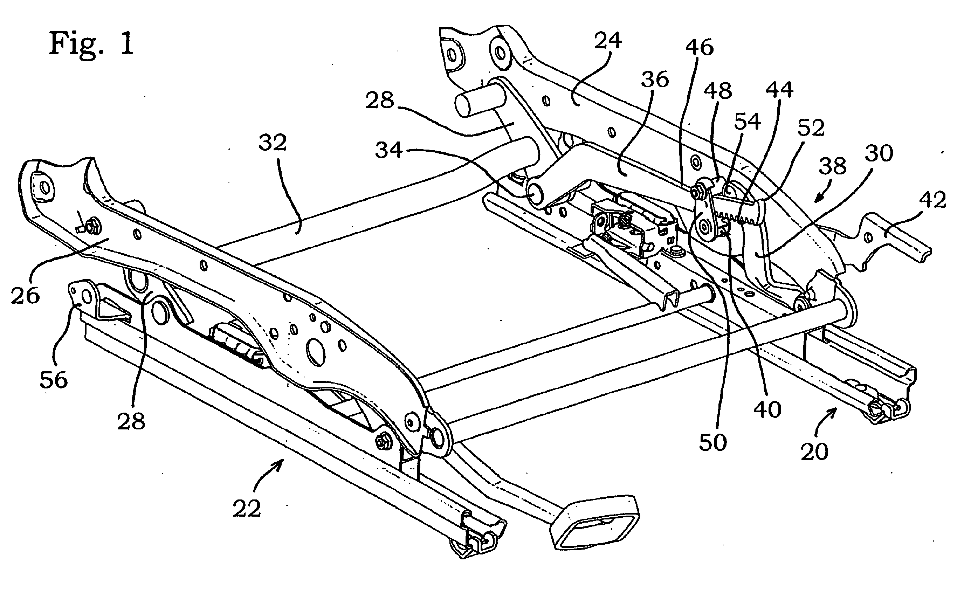

- Fig. 1:: eine perspektivische Darstellung eines höhenverstellbaren Untergestells eines Kraftfahrzeugsitzes mit einem Blockierarm und einer Arretiervorrichtung auf einer Sitzseite.

Das höhenverstellbare Untergestell gemäss der einzigen Figur hat ein linkes Schienenpaar 20 und ein rechtes Schienenpaar 22, die gemeinsam eine Längsverstellvorrichtung bilden. Weiterhin hat das Untergestell ein linkes Seitenteil 24 und ein rechtes Seitenteil 26. In bekannter Weise bestehen die Schienenpaare jeweils aus einer Bodenschiene, die an einer nicht dargestellten Bodengruppe eines Kraftfahrzeuges befestigt wird, und einer Sitzschiene. Die Sitzschiene ist mit dem zugehörigen Seitenteil 24 bzw. 26 im hinteren Bereich des Untergestells über einen hinteren Schwenkarm 28 und im vorderen Bereich über einen vorderen Schwenkarm 30 gelenkverbunden. Dadurch wird ein Gelenkviereck gebildet.

In einer geänderten Ausführung kann der vordere Schwenkarm 30 aus zwei Einzelarmen zusammengesetzt sein, die eine eigene Einstellvorrichtung aufweisen. Auf diese Weise kann die Höhe der Vorderkante des Untergestells separat eingestellt werden.

Die beiden hinteren Schwenkarme 28 sind über eine Traverse 32 drehfest miteinander verbunden. Die beiden vorderen Schwenkarme 30 haben keine unmittelbare Verbindung analog der Traverse 32. Eine solche kann zwar vorgesehen sein, ist aber prinzipiell nicht nötig.

Die linke Seite des Untergestells, die in der Figur rechts erscheint, hat eine Vorrichtung zur Höhenverstellung des Seitenteils 24 gegenüber dem Schienenpaar 20. Auf diese Vorrichtung wird im folgenden näher eingegangen.

An einem Gelenkpunkt 34, der bestimmt ist durch die Gelenkachse zwischen dem linken hinteren Schwenkarm 28 und der zugehörigen Sitzschiene, ist ein Blockierarm 36 angelenkt. Diese Anlenkung erfolgt an einem unteren, hinteren Endbereich dieses Blockierarms 36. Der Blockierarm 36 verläuft im wesentlichen auf einer Diagonalen des Gelenkvierecks aus den beiden Schwenkarmen 28, 30, der Sitzschiene und dem linken Seitenteil 24.

In Nähe eines oberen Endbereichs des Blockierarms 36 ist eine Arretiervorrichtung 38 am zugehörigen Seitenteil 24 vorgesehen. Im konkret gezeigten Ausführungsbeispiel hat sie eine Ritzel 40, das drehbar um eine Ritzelachse im linken Seitenteil 24 gelagert ist. Es steht auf der Innenseite dieses Seitenteils, die dem anderen Seitenteil 26 zugewandt ist, vor. Auf der Aussenseite dieses Seitenteils 24 befindet sich eine Ein- und Feststellvorrichtung, die hier im gezeigten Ausführungsbeispiel handbetätigbar ist. Die Betätigung erfolgt über einen Handhebel 42. Es werden hier sogenannte Schrittschaltwerke eingesetzt, wie sie beispielsweise aus DE 36 08 858 A, DE 44 00 910 A und DE 36 16 290 A vorbekannt sind.

In der gezeigten Darstellung befindet sich der Handhebel 42 in der Ruheposition. Wird er innerhalb des zugelassenen Schwenkwinkels nach oben gezogen, so dreht sich das Ritzel 40 in einer Richtung. Wird der Handhebel 42 nach unten gedrückt, dreht sich das Ritzel 40 in der anderen Drehrichtung.

Am nach vorn weisenden, oberen Endbereich des Blockierarms ist eine Verzahnung 44 vorgesehen, die mit den Zähnen des Ritzels 40 in ständigem Eingriff ist. Auf der dieser Verzahnung 44 gegenüberliegenden Schmalfläche hat der Blockierarm 36 eine Führungsfläche 46, die parallel zur Verzahnung 44 verläuft. Dieser Führungsfläche ist ein Führungsteil 48 in Form eines Stehbolzens zugeordnet. Die Führungsfläche 46 gleitet an diesem Führungsteil 48. Es ist möglich, das Führungsteil 48 elastisch auszuführen, sodass es die Führungsfläche 46 und damit den Blockierarm 36 elastisch gegenüber dem Ritzel 40 vorbelastet.

Die Lagerachse des Ritzels 40 und das als Bolzen ausgebildete Führungsteil 48 sind durch ein Abschlussteil 50 miteinander verbunden. Da das Führungsteil 48 und das Ritzel 40 am linken Seitenteil 24 angeordnet sind, wird ein geschlossener, ringförmiger Umgriff um den vorderen, oberen Endbereich des Blockierarms 36 erreicht. Der Blockierarm 36 hat an seinem freien Ende eine Nase 52, die von der Führungsfläche nach oben wegspringt. In einer Alternative kann auch eine Nase vorgesehen sein, die nach unten, von der Verzahnung 44 wegspringt. Die Nase 52 ist so bemessen, dass der freie Endbereich des Blockierarms 36 nicht durch den Spalt zwischen Führungsteil 48 und Ritzel 40 passt. Auf diese Weise wird vermieden, dass der Blockierarm 36 ausser Eingriff mit dem Ritzel 40 kommen kann.

Wie die Figur zeigt, ist der linke vordere Schwenkarm 30 an der Innenseite des linken Seitenteils 24 angelenkt, diese Anlenkung erfolgt um eine Anlenkachse 54. Sie befindet sich in unmittelbarer Nähe des Führungsteils 48 und etwas oberhalb des Ritzels 40. Der vordere Schwenkarm 30 ist als flaches Teil ausgeführt, das zwar in seinem unteren Bereich plastisch deformiert ist, nicht aber im Bereich der Überdeckung mit dem Seitenteil 26. Das freie Ende des Blockierarms 36 übergreift und überdeckt den oberen Bereich des vorderen Schwenkarms 30 auf der Innenseite des Untergestells. Damit ist der obere, vordere Endbereich des Blockierarms 36 seitlich zwischen dem vorderen Schwenkarm 30 und dem Abschlussteil 50 positioniert.

Der Blockierarm 36 ist einstückig ausgeführt. Im gezeigten Ausführungsbeispiel hat er zwei im Winkel zueinander angeordnete Teilstücke, die einen Winkel zwischen 120 bis 160° einschliessen. Dadurch verläuft in der gezeigten Position ein vorderes Teilstück, das die Verzahnung 44 einschliesst, im wesentlichen parallel zum Seitenteil 26. Ein hinteres Teilstück steht in einem Winkel von etwa 45° zum Schienenpaar 20.

Der Blockierarm 36 ist ein ebenes Stanzteil. Den Abstand vom Seitenteil 24, den er aufgrund des zwischengreifenden vorderen Schwenkarms 30 in seinem vorderen Bereich hat, hat er auch in seinem hinteren Bereich, weil der hintere Schwenkarm 28 so angeordnet ist, dass er auf seiner einen Hauptfläche dem Seitenteil 24 benachbart ist, auf seiner anderen Hauptfläche dem Blockierarm 36 gegenübersteht.

Grundsätzlich ist es auch möglich, dem Blockierarm nicht am Gelenkpunkt 34, sondern am hinteren Schwenkarm 28, beispielsweise um die Traverse 32 anzulenken, oder aber ihn an der Sitzschiene des Schienenpaares 20 separat anzulenken, z. B. etwas vor dem Gelenkpunkt 34.

In der gezeigten Ausführung befindet sich das Ritzel 40 unterhalb der Verzahnung 44. Es ist auch eine umgekehrte Anordnung möglich, bei der die Verzahnung 44 auf der nach oben weisenden Schmalfläche des Blockierarms 36 ausgebildet ist. Dann weist die zugeordnete Führungsfläche nach unten.

In einer bevorzugten Ausführung befinden sich Blockierarm 36 und zugeordnete Arretiervorrichtung 38 auf derjenigen Sitzseite, an der nicht das Gurtschloss befestigt ist. Wie aus der Figur zu ersehen ist, hat die rechte Sitzseite eine Lasche 56, die für die Befestigung eines Gurtschlosses über ein Zwischenstück vorgesehen ist. Bekanntlich befindet sich das Gurtschloss an der Tunnelseite eines Kraftfahrzeuges. Damit befindet sich die erfindungsgemässe Einstell- und Feststellvorrichtung für die Höhenverstellung an der Sitzaussenseite, also der Tür zugewandten Seite.

Eine elektromotorische Ausbildung kann entsprechend DE 195 23 136 A realisiert werden, dort insbesondere Figur 2. Es ist auch ein Spindelantrieb möglich, wie er beispielsweise aus DE 199 56 614 A bekannt ist. Hierzu muss das vordere, obere Ende des Blockierarmes 36 als Spindel ausgeführt sein.

Es ist möglich, auf beiden Sitzseiten eine Einstell- und Feststellvorrichtung nach der Erfindung vorzusehen. Hierzu wird auf beiden Sitzseiten jeweils ein Blockierarm 36 vorgesehen, der in ein Ritzel eingreift. Die beiden Ritzel sind drehverbunden. Nur einem Ritzel ist eine Arretiervorrichtung zugeordnet.

## Patentansprüche

1. Höhenverstellbares Untergestell eines Kraftfahrzeugsitzes mit einem linken und einem rechten Schienenpaar (20, 22), einer Längsverstellvorrichtung und mit einem linken und mit einem rechten Seitenteil (24, 26), die jeweils über einen hinteren und einen vorderen Schwenkarm (28, 30) mit der zugehörigen Sitzschiene des Schienenpaars (20) gelenkverbunden sind, **dadurch gekennzeichnet, dass** ein Blockierarm (36) vorgesehen ist, der mit einem unteren Endbereich am Gelenkpunkt (34) eines hinteren Schwenkarms (28) an der zugehörigen Sitzschiene angelenkt ist und der in Nähe seines oberen Endes in einer Arretiervorrichtung (38) lösbar festgelegt ist, die am zugehörigen Seitenteil (24) befestigt ist.

2. Höhenverstellbares Untergestell nach Anspruch 1, **dadurch gekennzeichnet, dass** der Blockierarm (36) im Bereich des oberen, vorderen Endes eine Verzahnung (44) aufweist und dass die Arretiervorrichtung (38) ein im zugehörigen Seitenteil (24) drehbar gelagertes Ritzel (40) aufweist.

3. Höhenverstellbares Untergestell nach Anspruch 2, **dadurch gekennzeichnet, dass** dem Ritzel (40) ein handbetätigbarer Stellantrieb oder ein Antrieb mit einem Elektromotor zugeordnet ist.

4. Höhenverstellbares Untergestell nach Anspruch 1, **dadurch gekennzeichnet, dass** die Arretiervorrichtung (38) in Nähe des Gelenkpunktes (34) des vorderen Schwenkarms (30) am zugehörigen Seitenteil (24) angeordnet ist.

5. Höhenverstellbares Untergestell nach Anspruch 2, **dadurch gekennzeichnet, dass** der Blockierarm (36) eine seiner Verzahnung (44) gegenüberliegende Führungsfläche (46) aufweist und dass ein Führungsteil (48) vorgesehen ist, das dem Ritzel (40) gegenüberliegend ein Führungsteil (48) am zugehörigen Seitenteil (24) befestigt ist und der Führungsfläche (46) benachbart ist.

6. Höhenverstellbares Untergestell nach Anspruch 1, **dadurch gekennzeichnet, dass** das obere Ende des Blockierarms (36) im Bereich der Arretiervorrichtung (38) ringförmig geschlossen umgriffen ist.

7. Höhenverstellbares Untergestell nach Anspruch 1, **dadurch gekennzeichnet, dass** der Blockierarm (36) einstückig ausgeführt ist aus zwei im Winkel zueinander angeordneten Teilstücken, vorzugsweise bilden diese Teilstücke einen Winkel zwischen 120 bis 160 Grad miteinander.

8. Höhenverstellbares Untergestell nach Anspruch 2, **dadurch gekennzeichnet, dass** die Verzahnung (44) zum Schienenpaar (20) der Längsverstellvorrichtung weist, an dessen Sitzschiene der Blockierarm (36) angelenkt ist.

9. Höhenverstellbares Untergestell nach Anspruch 1, **dadurch gekennzeichnet, dass** beide hinteren Schwenkarme (28) über eine Traverse (32) drehfest miteinander verbunden sind und dass auf nur einer Sitzseite ein Blockierarm (36) und eine zugehörige Arretiervorrichtung (38) vorgesehen sind.

10. Höhenverstellbares Untergestell nach Anspruch 1, **dadurch gekennzeichnet, dass** der Blockierarm (36) sich in unmittelbarer Nähe eines vorderen Schwenkarms (30) befindet, insbesondere an diesem gleitet.

## Claims

1. A height-adjustable underframe of a vehicle seat with a left and a right couple of rails (20, 22) of a longitudinal adjusting device and with a left and a right side part (24, 26) that are each hinge-connected to the corresponding seat rail of the couple of rails (20) by way of a rear and a front pivoting arm (28, 30), **characterized in that** a blocking arm (36) that is linked by a lower end region to the corresponding seat rail on the hinge point (34) of a rear pivoting arm (28) and that is detachably fixed in proximity to its upper end in a stopping device (38), which is fastened on the corresponding side part (24).

2. A height-adjustable underframe according to claim 1, **characterized in that** the blocking arm (36) is provided with teeth (44) in the region of its upper, front end and **characterized in that** the stopping device (38) has a pinion (40) that is rotatably carried in bearings in the corresponding side part (24).

3. A height-adjustable underframe according to claim 2, **characterized in that** a hand-controllable actuating drive or an electric motor driven drive is assigned to the pinion (40).

4. A height-adjustable underframe according to claim 1, **characterized in that** the stopping device (38) is arranged in proximity to the hinge point (34) of the front pivoting arm (30) on the corresponding side part (24).

5. A height-adjustable underframe according to claim 2, **characterized in that** the blocking arm (36) has a guiding area (46) that faces its teeth (44) and **characterised in that** there is provided a guide element (48) which is fastened on the corresponding side part (24) opposite the pinion (40) and is neighboring said guiding area (46).

6. A height-adjustable underframe according to claim 1, **characterized in that** the upper end of the blocking arm (36) is encircled in the form of a ring in the region of the stopping device (38).

7. A height-adjustable underframe according to claim 1, **characterized in that** the blocking arm (36) is made in one piece out of two angled portions that are preferably inclined to each other with an angle from 120 to 160.degree.

8. A height-adjustable underframe according to claim 2, **characterized in that** the teeth (44) are pointing toward the couple of rails (20) of the longitudinal adjusting device on the seat rail of which the blocking arm (36) is linked.

9. A height-adjustable underframe according to claim 1, **characterized in that** the two rear pivoting arms (28) are non-rotatably connected to each other by way of a tie-bar (32) and wherein **in that** a blocking arm (36) and a corresponding stopping device (38) are provided on one seat side only.

10. A height-adjustable underframe according to claim 1, **characterized in that** the blocking arm (36) is located in the immediate neighborhood of a front pivoting arm (30), more specifically wherein **in that** it slides thereon.

## Revendications

1. Support réglable en hauteur d'un siège de véhicule automobile avec une paire gauche et une paire droite de rails (20, 22) d'un dispositif de réglage longitudinal et avec des parties latérales gauche et droite (24, 26) qui sont reliées de façon articulée respectivement par un bras pivotant arrière et un bras pivotant avant (28, 30) au rail associé de siège de la paire de rails (20), **caractérisé par le fait que** l'on prévoit un bras de blocage (36) qui est articulé avec une zone terminale inférieure sur le point d'articulation (34) d'un bras pivotant arrière (28) sur le rail associé de siège et qui est fixé de manière amovible, à proximité de son extrémité supérieure, dans un dispositif d'arrêt (38) qui est fixé sur la partie latérale associée (24).

2. Support réglable en hauteur selon la revendication 1, **caractérisé par le fait que** ledit bras de blocage (36) présente une denture (44) au niveau de l'extrémité supérieure avant et que ledit dispositif d'arrêt (38) présente un pignon (40) logé à rotation dans la partie latérale associée (24).

3. Support réglable en hauteur selon la revendication 2, **caractérisé par le fait qu'**audit pignon (40) est associé un actionneur qui peut être commandé manuellement ou un mécanisme d'entraînement avec un moteur électrique.

4. Support réglable en hauteur selon la revendication 1, **caractérisé par le fait que** ledit dispositif d'arrêt (38) est disposé à proximité du point d'articulation (34) du bras pivotant avant (30) sur la partie latérale associée (24).

5. Support réglable en hauteur selon la revendication 2, **caractérisé par le fait que** le bras de blocage (36) présente une surface de guidage (46) situées en vis-à-vis de sa denture (44) et que l'on prévoit une pièce de guidage (48) qui, située en vis-à-vis du pignon (40), est fixée sur la partie latérale associée (24) et est voisine de ladite surface de guidage (46).

6. Support réglable en hauteur selon la revendication 1, **caractérisé par le fait que** l'extrémité supérieure du bras de blocage (36) est embrassée annulairement de façon fermée au niveau du dispositif d'arrêt (38).

7. Support réglable en hauteur selon la revendication 1, **caractérisé par le fait que** ledit bras de blocage (36) est réalisé en une seule pièce à partir de deux tronçons disposés à un angle l'un par rapport à l'autre, de préférence ces deux tronçons forment entre eux un angle compris entre 120 et 160 degrés.

8. Support réglable en hauteur selon la revendication 2, **caractérisé par le fait que** ladite denture (44) montre vers la paire de rails (20) du dispositif de réglage longitudinal, sur le rail de siège de laquelle est articulé le bras de blocage (36).

9. Support réglable en hauteur selon la revendication 1, **caractérisé par le fait que** les deux bras pivotants arrière (28) sont reliés entre eux par l'intermédiaire d'une traverse (32) de manière à être solidaires en rotation et qu'un bras de blocage (36) et un dispositif associé d'arrêt (38) sont prévus sur un côté seulement du siège.

10. Support réglable en hauteur selon la revendication 1, **caractérisé par le fait que** ledit bras de blocage (36) est situé à proximité immédiate d'un bras pivotant avant (30), en particulier glisse sur celui-ci.
